Europäisches Patentamt

European Patent Office

Office européen des brevets

(11) Publication number: **0 036 315**
**B1**

# EUROPEAN PATENT SPECIFICATION

(45) Date of publication of patent specification: **22.01.86**

(51) Int. Cl.⁴: **B 01 D 13/04**

(21) Application number: **81301074.1**

(22) Date of filing: **13.03.81**

(54) Anisotropic membranes.

(30) Priority: **14.03.80 US 130566**

(43) Date of publication of application:
**23.09.81 Bulletin 81/38**

(45) Publication of the grant of the patent:
**22.01.86 Bulletin 86/04**

(84) Designated Contracting States:
**DE FR GB IT SE**

(56) References cited:
**DE-A-2 110 158**
**GB-A-1 495 887**
**US-A-3 556 992**
**US-A-3 855 133**

(73) Proprietor: **BRUNSWICK CORPORATION**
**One Brunswick Plaza**
**Skokie Illinois 60077 (US)**

(72) Inventor: **Wrasidlo, Wolfgang J.**
**Brunswick Technetics 4116 Sorrento Valley**
**San Diego, California 92121 (US)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

# Description

## 1. Field of the invention

This invention relates generally to membranes which are useful as ultrafilters and microporous membranes useful in separating materials. More particularly, this invention relates to improved integral anisotropic membranes having a skin and a porous support.

## 2. Description of the prior art

Polymeric membranes are well known. These membranes may generally be classified according to the sizes of particles which they retain or according to their pore size as either ultrafilter membranes, which have the finest pores, or microporous, or microfilter membranes which have coarser pores. The dividing line between ultrafilter membranes and microfilter membranes is at approximately 0.05 micrometres in pore size or smallest retained particle.

Membranes may also be classified according to the porosity difference or similarity of their two faces. Thus, membranes may be classified as symmetrical, when the two faces have similar porosity or as asymmetrical when the two faces differ in porosity.

An important characteristic of a membrane is its permeability to water which is customarily expressed in units of cm/min-psi which represents the macroscopic velocity in cm/min at which water flows through the membrane when the driving pressure is one psi. This permeability may be measured by the volume of pure water which passes through a unit area of membrane per unit time.

The flow of water through the membrane is, within wide limits, directly proportional to the applied pressure. In general, the permeability to water decreases as the retentivity of the membrane to solutes increases, because smaller pores offer more resistance to flow. This relationship, however, is not a simple one since the retentivity depends on the single smallest pore encountered by the liquid in passing the membrane, whereas the resistance to flow depends on the cumulative effect of all the pores through which the sample must pass. Hence, membranes of similar solute retention having uniform pores throughout their entire thickness have lower permeabilities than those whose retentivity is due to a thin skin having proper pore sizes combined with a body or substrate of much larger pores. In other words, symmetrical membranes offer more resistance to fluid flow and therefore have slower flow rates compared to asymmetrical membranes of similar retentivity.

In addition to their retention characteristics, membranes may be characterized by their ability to resist plugging or their dirt-holding capacity. Plugging refers to a reduction of the filtration rate during the filtering operation as a function of the amount of liquid passing the membrane. In order to extend the lifetime of a membrane in a given filtration operation, it is customary to prefilter the fluid through a membrane or filter having higher flow rates and smaller retentivities, but still the ability to reduce severe fouling, or blocking of the final membrane filter.

Structurally, membranes vary greatly and may generally be classified as either reticulated or granular. In the former, there is a three-dimensional open network of interconnecting fibrous strands and open interstitial flow channels. In the granular type structure, however, incompletely coalesced solid particles called granules leave an interconnected network of pores between them. Reticulated membrane structures generally have a higher porosity than granular membrane structures. (Porosity of membranes is defined as (1—the relative density). This difference, in turn, is the ratio of the weight of a given volume of membrane to that of the bulk polymer forming the membrane).

Polymeric membranes are generally made by preparing a solution of the polymer in a suitable solvent, forming the solution into a thin sheet, a hollow tube or a hollow fibre, and then precipitating the polymer under controlled conditions. Precipitation may be carried out by solvent evaporation or by contacting the polymer solution with a nonsolvent.

U.S. Patent No. 3,615,024 discloses a method of forming porous polymeric membranes which are described as being highly asymmetric. The membranes produced according to that method are only slightly asymmetric, however, and have permeability to water which is only slightly higher than that of symmetrical membranes of the same retentivity.

Membranes may also be classified as either composite, supported or integral. Composite membranes comprise a very thin retentive layer attached to a pre-formed porous support. In a supported membrane, the actual membrane is attached to a strong sheet material of negligible retentivity. Integral type membranes are formed in one and the same operation having layers of the same composition. These layers may have very different properties, depending, in general, on whether the membrane is symmetrical or asymmetric.

The search has continued for improved, highly asymmetric, membranes having improved retention properties and enhanced flow rates. The present invention accordingly provides an asymmetric integral polymeric membrane comprising a skin and a porous support, characterised in that the membrane has a bulk porosity greater than 70%, the skin contains pores of average diameter 0.005 to 3.0 μm, and the support comprises a reticulated structure containing pores which gradually increase in size from the skin to the opposite face of the support, the average pore diameter of the pores at said opposite face being from 10 to 20000 times the average pore diameter of the skin pores.

The membrane according to the invention can be used as an ultrafilter or microfilter with improved flow rate and dirt-holding capacity.

As previously mentioned, the opposite face of the support in the membrane according to the invention contains pores having an average pore size ranging from 10 to 20000 times the average pore diameter of the pores of the skin (that is the asymmetry factor is 10 to 20,000). The lower end of this range corresponds to membranes which have larger surface pores, whereas the higher part of the range corresponds to membranes which have finer surface pores. As already stated, the membrane has a porosity greater than 70%.

Membranes according to the invention may be prepared, e.g. by a method as described in an application divided from the present application, No. 84105108.9. This method will not be claimed but it will now be described with reference to the accompanying drawings in which:

Figure I comprises two diagrams which show the effect of variations in solvent/non-solvent concentration and in temperature in arriving at the metastable region.

Figure II shows the effect of changes in non-solvent concentration on the flow rate and retention of the membranes of the present invention.

Figure III is a scanning electron microscope photomicrograph of a membrane of the present invention.

Figure IV is a scanning electron microscope photomicrograph of a membrane of the prior art.

The preparation of membrane casting dopes involves well-known principles of polymer solubility, including the concept of critical miscibility conditions, particularly the critical miscibility temperature, $T_c$. Generally, at temperatures above $T_c$, a polymer is completely miscible with a given solvent, whereas below that temperature, there is a region of phase separation. In the limit of infinite polymer chain length, $T_c$ is the so-called "theta"—or Ⓗ temperature or condition, where the interaction forces between polymer molecules and solvent molecules equal the interactions of polymer molecules for other molecules of the same polymer.

Solvents for polymers may be categorized into two types. "Good" solvents are those in which the interactions (forces) between the polymer molecules and solvent molecules are greater than the forces of attraction between one polymer molecule and another polymer molecule. "Poor" or "ideal" solvents are those in which the interactions between the polymer and solvent are equal to the forces of attraction between one polymer molecule and another polymer molecule. Very poor solvents, which dissolve little or no polymer, are called non-solvents. These definitions apply not only to pure systems but also to mixtures of solvents as well as mixtures of polymers.

The region on a phase diagram in which polymer is not completely miscible with solvent may be delineated as a function of temperature and solution composition by a curve called the "binodal". On one side of this binodal curve, the system is thermodynamically unstable and on the other side it is stable. The unstable system close to the binodal is believed to undergo phase separation by a nucleation and growth mechanism. Inside the binodal there exists another region called the spinodal. At or close the spinodal the mechanism of phase separation may change to the so-called "spinodal decomposition" in which periodic and network structures may form without nucleation.

Figure I illustrates schematically the binodal and spinodal curves. Figure Ia shows the effect of temperature and concentration for a polymer and solvent. Line 10 is the binodal and line 11 is the spinodal. The concentration of polymer in the casting dope must be high enough to produce a coherent membrane (see dividing line 12) yet low enough to obtain substantially all reticulated structure in the asymmetric support (see dividing line 13). The dividing lines 12 and 13 have been established for purposes of illustration only and do not represent actual polymer concentrations. Polymers of the present invention may be cast in the shaded area 14 of Figure Ia. Toward the binodal side of region 14, ultrafiltration membranes (pore sizes of from about 0.001 to about 0.05 micrometres) may be produced whereas toward the spinodal side of this region, microporous membranes (pore sizes of from about 0.05 to about 3 micrometres) may be produced. The term "metastable liquid dispersion" is currently used to refer to the region in Figure I between binodal 10 and spinodal 11. Figure Ib is a phase diagram for the three component system polymer-solvent-non-solvent at constant temperature. The numbers in Figure Ib represent the same thing as the corresponding numbers (absent the "a") in Figure Ia represent.

In Figure Ia, toward the left side of line 10 beside shaded area 14 is the region of stable solutions. If polymer dopes are cast in this region, prior art membranes are produced. These membranes lack the reticulated structure of the asymmetric support of the membranes of the present invention. Toward the right side of line 11, Figure Ia, beside shaded area 14 of Figure Ia, there exists the region of two segregated phases where membranes cannot be produced.

When a polymer/solvent system is made to cross the binodal by, for example, lowering the temperature or by, for example, the addition of a non-solvent, phase separation generally occurs spontaneously as evidenced by the appearance of marked turbidity, but phase segregation (i.e., the appearance of two distinct bulk layers) is delayed. The system becomes a liquid-liquid dispersion, whose stability depends markedly on how far the system is within the binodal. When the system is within but close to the binodal condition, the system (i.e., polymer dispersion) may be stable for weeks in the sense that no visible segregation takes place. When the system is further inside the binodal, segregation may occur within hours or even minutes. Since segregated phases are the thermodynamically stable forms of the system, these dispersions are metastable. As the process for converting these metastable dispersions takes only seconds or minutes, it has been found that such dispersions may be used for the formation of membranes.

Furthermore, it has been found that this metastable liquid dispersed state (between binodal 10 and spinodal 11) which is an essential part of the method under consideration, may be approached from the position of a state comprising stable segregated phases by redispersing (i.e., agitating) those segregated phases.

In general, as the system approaches the spinodal from the binodal, the turbidity of the dispersion increases. This is believed due, in part, to the formation of larger dispersed liquid particles.

During quenching of the metastable dispersed polymer solution with a suitable non-solvent, very rapid solidification occurs. While this process of solidification is not yet fully understood, it is believed that for the membranes of this invention, the mechanism of solidification involves spinodal decomposition of the very unstable system formed by the interaction of the coagulating liquid with the casting dope. Because of the rapidity of the process, the process may be carried out even with relatively low viscosity polymer dopes. It is also believed that spinodal decomposition is favored by bringing the casting dope close to its spinodal.

The critical importance of casting membranes from solutions within the binodal is in the way the properties of resulting membranes are affected as illustrated in Figure II. Figure II shows the water permeability and retention of the protein Immunoglobulin G of membranes produced from a dope containing 10 per cent polysulfone in dimethylformamide with various amounts of the non-solvent methyl-1 butanol. It may be seen that an enormous change in water permeability and solute retentivity occurs between about 14.4 and 14.6 per cent of added non-solvent. The binodal corresponds to about 14.5 per cent and it is after the binodal is crossed that the water permeability of the resulting membrane is optimized. The individual points in Figure II show how reproducibly the properties of the membranes may be controlled.

In addition to the requirement of a metastable polymer-solvent-non-solvent casting dope, the relationship of these components to the quench liquid is also important. The polymer must, of course, be insoluble in the quench liquid and the solvent should be miscible with the quench liquid (and vice versa). In fact, it is also preferred that the solvent and quench liquid be completely soluble in each other under membrane formation conditions. Water is a generally preferred quench liquid for economic and environmental reasons, although a mixture of 80 per cent water and 20 per cent dimethylformamide is particularly preferred. It is also preferred that the solvent have a low viscosity.

If the solvent has a low viscosity and the solvent and quench liquid are completely soluble in one another, rapid diffusion of the quench liquid into the casting dope is assured.

The non-solvent, if present, should have only limited solubility in the quench liquid. This limited solubility is believed to be effective in increasing the asymmetry of the resulting membrane.

The asymmetry of a porous membrane may be measured by the ratio of the average pore diameter of its two faces.

The formation of membranes having larger pores (above about 0.2 µm) may be accomplished in various ways as discussed herein but, for convenience, the process by which these large pore membranes are produced is preferably facilitated by increasing the proportion of non-solvent in the casting dope. At constant turbidity, the amount of non-solvent that may be added to the system without causing spinodal decomposition is higher at higher temperatures. For best results it is preferred to increase the temperature very close to the critical temperature for a given solvent/non-solvent combination as illustrated in Figure IA and also as in Example VIII. At lower temperatures, the proportions of solvent described are not attainable.

The quench liquid as indicated above should be inert with respect to the polymer used and should preferably be miscible with the polymer solvent and should have limited miscibility with the non-solvent. When water is used as the quench liquid, its properties and those of the resulting membranes may be modified by the presence of certain additives, such as surfactants and solvents. The addition of one or more surfactants to the quench liquid often makes the membrane hydrophilic so that it is easily wetted by water and thus may be used for filtration without substantial pressure to overcome capillary forces.

The amount of surfactant may vary widely but generally from about 0.001 to about 2 per cent, typically from about 0.02 to about 0.2 per cent, and preferably from about 0.02 to about 0.1 per cent by weight total quench liquid may be employed.

Typical surfactants include sodium dodecyl sulfate, ethoxylated alcohols, glycerol esters and fluorocarbon surfactants.

The concentration of the polymer in the casting dope must be low enough to form a substantially all-reticulated structure within the asymmetric support but must be high enough to produce a coherent membrane. If the polymer concentration were too low, the resulting membrane would have no coherency and, in the extreme case, only dust would be formed. If the polymer concentration were too high, then the structure within the asymmetric support would not be all substantially reticulated, but would contain at least some granulated structure.

Although the appropriate concentration of polymer varies somewhat depending upon the particular polymer used, the polymer concentration when the polymer is polysulfone alone should be generally from about 6 to 13, typically from about 8 to about 12, and preferably from about 9 to about 10 percent by weight of the casting dope. The particular polymer chosen will, of course, determine to a large extent the final properties of the membrane.

It will be evident from the above that this method may be practiced with a variety of polymers or their mixtures, solvents or their mixtures, and non-solvents or their mixtures and over a range of temperatures, provided that the combination of these components and parameters is such as to produce the desired metastability. The properties and performance of the membrane produced by casting a metastable dope depend not only on the degree of this instability and on the general relationship of mutual solubility of the polymer, solvent, non-solvent and quench liquid as outlined above, but also on the particular materials selected and their mutual interactions in a manner that is not fully understood at present. The following are some of the materials which have been found useful in the practice of this method but it will be clear to those skilled in the art that many others and/or their combinations may also be used.

The polymers which may be used to produce these membranes include broadly any polymer generally used to produce membranes, although, as will be discussed in greater detail hereinbelow, the choice of polymer is related to the choice of solvent and non-solvent used in the casting process. Polymers which have been found to be particularly useful in the instant process include polysulfone polyimides, polycarbonates and polyacrylonitriles (including polyalkylacrylonitriles). Mixtures of two or more polymers may also be used.

Preferred polymers within the above noted groups for use in the present invention include Ciba Geigy X U218 polyimide (which is a soluble thermoplastic polyimide based on 5(6) - amino - 1 - (4' - aminophenyl) - 1,3,3 - trimethylindone), Upjohn P 2080 polyimide, Lexan polycarbonate, and Union Carbide P-3500 polyarylsulphone.

A particularly preferred polymer is Union Carbide P-3500 polyarylsulphone. When this particular polymer is employed, it has been found that a minimum molecular weight of 30,000 is needed in order to obtain a coherent membrane with a reticulated structure. The upper limit of molecular weight is approximately one million. The use of polyarylsulphone with molecular weights in excess of one million is undesirable because of the formation of polymer gels. The preferred molecular weight range of the other polymers depends upon the particular polymer employed.

The solvents which may be used to produce membranes according to this invention include:

    Dimethyl formamide
    Dimethyl acetamide
    Dioxane
    N-Methyl pyrrolidone
    Dimethyl sulfoxide
    Chloroform

    Tetramethylurea
    Tetrachloroethane

Suitable non-solvents include:

| | |
|---|---|
| Methanol | Acetone |
| Ethanol | Methyl ethylketone |
| Isopropanol | Methyl isobutyl ketone |
| Amyl alcohol | Nitropropane |
| Hexanol | Butyl ether |
| Heptanol | Ethyl acetate |
| Octanol | Amyl acetate |
| Propane | |
| Hexane | |
| Heptane | |
| Octane | |

A significant advantage of the membranes of the present invention is their high fluid permeability, particularly for small pore sizes. This is believed to be the result of their very high asymmetry so that the reticulated part of the membrane offers a relatively low resistance to fluid flow as compared to the finely porous skin. For example, a membrane according to this invention can have a pore size of 0.01 µm and a flow rate of 0.9 cm/min psi (one hundred times higher than that of commercial membranes now available having this pore size). At higher pore sizes the advantage of membranes prepared according to this invention is less striking but remains significant even at the large 0.4 µm pore size (Example IV). These membranes can provide a flow rate of over 8 cm/min psi which is 30 to 60% greater than that of membranes now commercially available.

A log-log plot of the water permeability of the membranes of the present invention against pore size indicates a less than inverse relationship whereas the same plot of conventional membranes indicates a much faster decrease.

The membranes of this invention may be used with either the skin side or the support side of the membrane upstream with respect to fluid flow. For microporous membranes, however, it is preferred to use the membrane so that the support is upstream. In this way, the reticulated porous support serves as a built-in prefilter, greatly increasing the dirt-holding capacity of the membrane. The fluid encounters the largest pores first and later encounters pores having gradually decreasing size with the smallest pores—those in the skin—being encountered last. Hence larger particles are retained before they reach the skin and do not clog its pores. An in-depth filtration is obtained in which the particles are retained at various levels leaving many more pores available for flow then if they were all retained in one plane at the skin. If the membrane is not highly asymmetrical this advantage does not exist since approximately the same amount of retained matter fouls both sides of the membrane because the pore sizes on both sides are approximately the same.

When a microporous membrane of the present invention is used with its support side upstream, it has been found that the volume of fluid which may be passed through the membrane by the time the rate of flow through the membrane is reduced to 50% of the initial value is generally at least about 2, typically from about 2 to about 6, and preferably at least about 5 times as large as the volume of fluid which may be passed through the same membrane used with its skin side upstream. Another object of the present invention is therefore a method of using a membrane as described hereinbefore, in which the membrane is disposed in a fluid flow with the support upstream such that the volume of fluid passed through said membrane by the time the rate of flow through said membrane is reduced to 50% of the initial value is at least twice the volume of fluid which would be passed through the same membrane if it had its skin upstream. For certain applications, it is important that one be able to readily test the integrity of a membrane. The so-called "bubble point" test may be used to determine the largest pore size in the membrane. This bubble point test involves passing a gas such as air, through a wetted membrane and determining the pore size a function of the pressure needed to push a bubble through that pore of the membrane. It is important that one obtain accurate bubble point data since there is a correlation between bubble point and ability of a membrane to sterilize a particular fluid. If the highly asymmetric microporous membranes of this invention are used with the support side upstream, the representative bubble point of the skin cannot be obtained because the gas passes parallel to the skin out the sides of the asymmetric support. Thus one could not use this bubble point test for highly asymmetric membranes which are used with their support side upstream.

To overcome this problem, it has been discovered that one can eliminate the pores from the outer perimeter of the asymmetric support by either removing those pores or filling the pores by means of, for example, sealing the outer diameter of the membrane, such as by heat sealing, filling the pores with an impermeable substance, such as glue, or mechanically collapsing the pores. By filling these pores or removing these pores, the representative bubble point of the skin is obtained.

Still another object of the invention is thus a method of carrying out a bubble-point test on a membrane as described hereinbefore when said membrane is used in a fluid flow with the support upstream, in which a gas is passed through the wetted membrane, the gas pressure required to push a bubble through the pores being indicative of the pore size of the membrane, wherein pores are eliminated from the entire outer edge surface prior to passage of said gas through the membrane.

The present invention is further illustrated by the following Examples. All parts and percentages in the Examples as well as in the remainder of the specification are by weight unless otherwise specified.

Example I

A 5% solution of polymethacrylonitrile in dimethylformamide is prepared at 40°C with rapid stirring. The solution is degassed by placing it in a water bath at 40°C for 30 minutes and then cooled to 30°C (below the critical temperature). At this temperature the solution becomes abruptly turbid. This solution is spread by means of a casting knife to a wet thickness of 10 mils (0.25 mm) on to a glass plate which is preheated to 30°C and the plate is transferred immediately into a water bath at ambient temperature, causing the wet film to coagulate. The resulting membrane has a water flow rate of 0.5 cm/min psi and a pore size of 0.05 µm.

Example II

A solution of polysulphone (P-3500 Union Carbide) is prepared in dimethylformamide and titrated with isopropyl alcohol to a composition consisting of 9.5% polysulphone, 10.3% isopropyl alcohol and 80.2% dimethylformamide. This solution is cast at ambient temperature (which is below the critical temperature) into a membrane as described in Example I. This membrane has a flow rate of 4 cm/min psi and a pore size of 0.2 µm, an elongation at break of 24% and a tensile strength of 30 kg/cm$^2$.

Example III

A solution of polysulphone (P-3500 Union Carbide) is prepared in dimethylformamide and titrated with hexane to a composition consisting of 9.9% polysulphone, 11.9% hexane, and 78.2% dimethylformamide. This solution is cast into water at ambient temperature resulting in a membrane with a flow rate of 0.32 cm/min-psi and 98% retention of ovalbumine.

Example IV

A solution of polysulfone (P-3500 Union Carbide) is prepared in dimethylformamide and heated to 40°C. This solution is then titrated with 2-methyl-2-butanol to an absorbance reading of 0.600 corresponding to a concentration of 9.5% polysulfone, 15.5% 2-methyl-2-butanol and 75% dimethylformamide. (The absorbance is zeroed with a 12% polysulfone/88% dimethylformamide solution). This solution is cast at 40°C into water. The resulting filter has a flow rate 7.4 cm/min psi, a bubble point of 35 psi (35×6.895×10$^3$ Pa) and an average pore diameter of 0.4 µm.

Comparative Example

Figure III is a scanning electron microscope photomicrograph of the top surface (magnified 100,000 times) and the bottom surface (magnified 80 times) of a membrane (having a molecular weight cut-off of 25,000) produced in accordance with the present invention by casting a solution of 10% polysulfone in a 78/12 mixture of dimethylformamide/hexane. The pore size of the asymmetric support is approximately 20,000 times the size of the pores in the skin (i.e., the membrane has a pore asymmetry of 1:20,000).

The water permeability of the membrane is 0.30 cm/min psi.

Figure IV is a scanning electron microscope photomicrograph of a prior art Millipore ultrafilter PSED, also having a molecular weight cut-off of 25,000. This top surface is magnified 100,000 times and the bottom surface is magnified 20,000 times. The pore asymmetry is 1:1. Its water permeability is 0.01 cm/min psi.

A comparison of Figures III and IV illustrate the highly asymmetric character of membranes produced according to the presently claimed invention vis-a-vis prior art membranes.

The membranes of the present invention are integral membranes having a skin which comprises generally less than about 5, typically from about 1 to about 5, and preferably from about 1 to about 3% of the thickness of the membrane. The remaining part of the membrane is the asymmetric support. There is a relatively sharp boundary between the skin layer and the asymmetric support layer although both layers form an integral membrane. There is a gradual change in pore size from the skin of the membrane to the opposite face of the membrane. The gradient in pore size in the asymmetric support is substantially logarithmic with respect to thickness, increasing gradually from the barrier skin.

The water permeability, p, of the membranes of the present invention is substantially linearly related to its retentive pore size, r, by the equation $p=K/r$ where K is a constant and for the membranes of the present invention K is generally greater than $1.5 \times 10^{-7}$ cm²/min psi. For ultrafilters, K is typically greater than about $2 \times 10^{-7}$ cm²/min psi, and preferably greater than about $3 \times 10^{-7}$ cm²/min psi. The coefficient of variation (i.e., the standard deviation divided by the mean value) for the membranes of this invention are typically between 30 and 50%. For example, a 40% coefficient of variation is obtained using a 0.2 µm rated polysulfone membrane.

The pore size distribution (i.e., the ratio of the maximum pore size to the average pore size) within the skin of the membranes of the present invention is generally less than about 5, typically less than about 3, and preferably less than about 2.

· The membranes of the present invention have improved physcial properties over prior art membranes. For example, a 0.2 µm polysulphone membrane according to the present invention has a tensile strength of 30 kg/cm², an elongation at break of 24% (see Exmaple II) in comparison to an elongation of about 5% with respect to 0.2 µm prior art membranes. These improved physical properties are important in most membrane applications but are of particular importance in medical applications where any membrane rupture due to insufficient elongation could be critical.

In the above description, permeability data have been quoted in units of cm/min psi; the relevant values can be converted to cm/min Pa by multiplication by $145 \times 10^{-6}$. The same factor ($145 \times 10^{-6}$) also applies to convert from cm²/min psi to cm²/min Pa (K constant, in the equation: $p=K/r$).

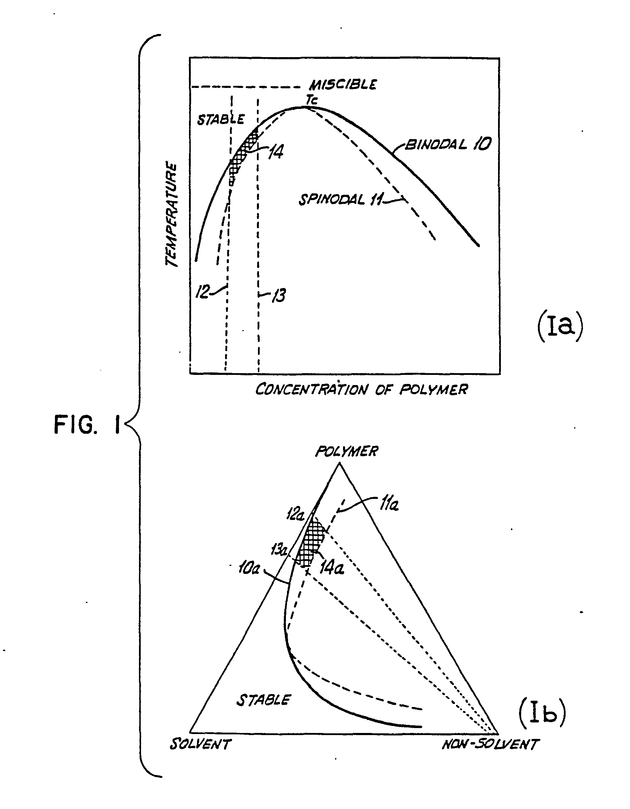

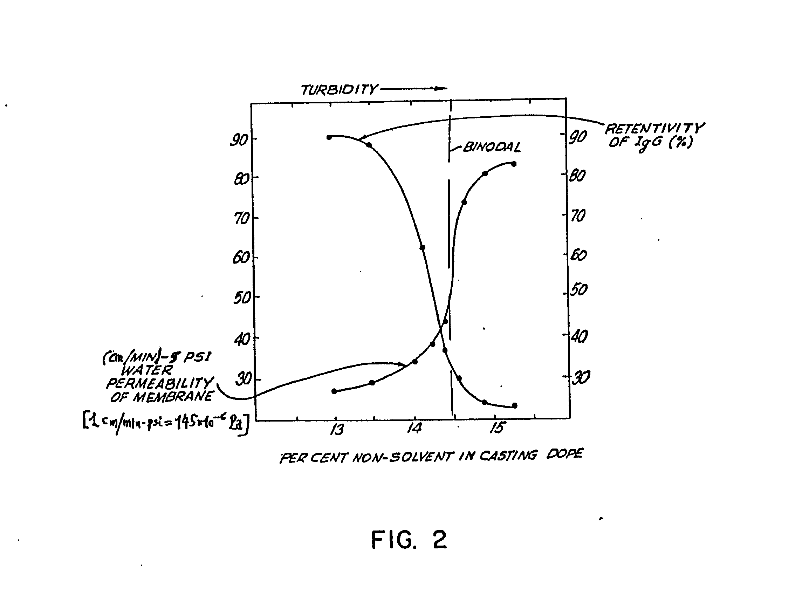

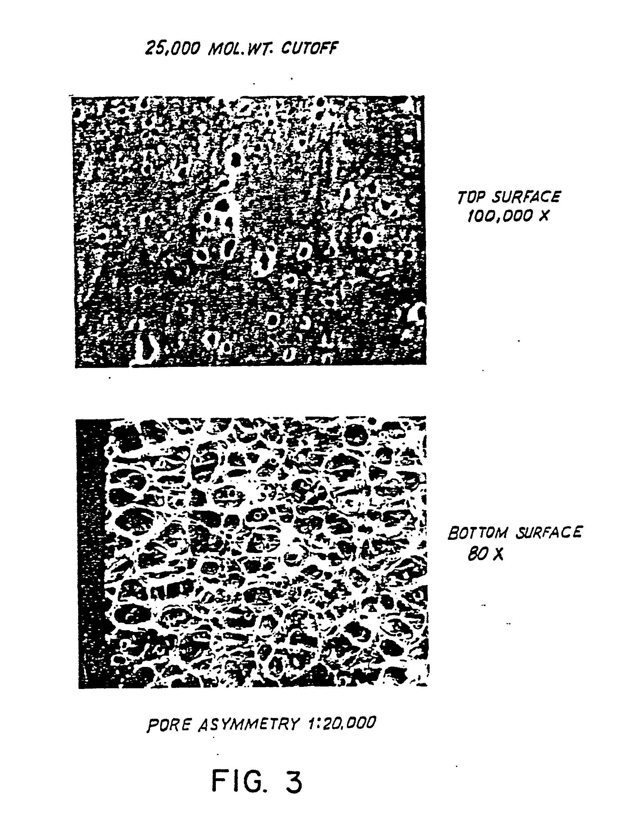

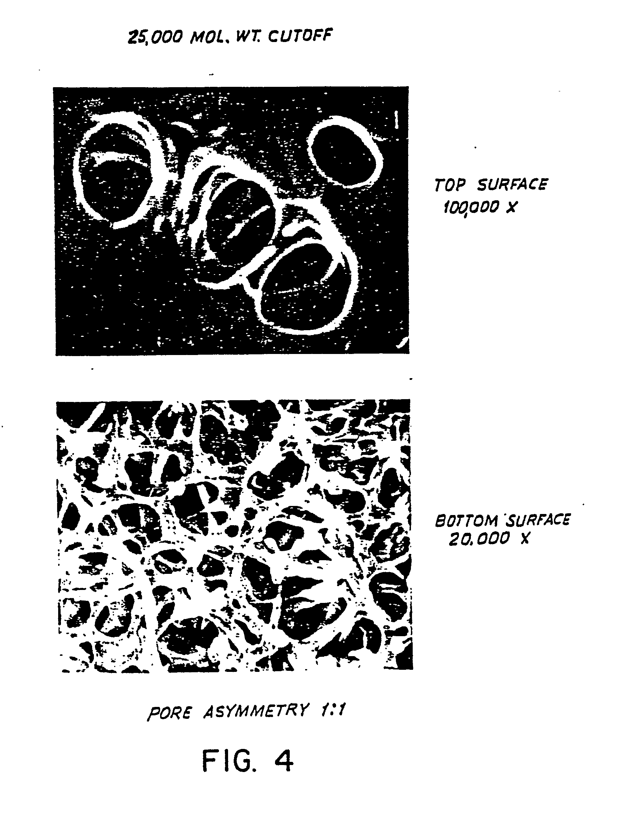

## Claims

1. An asymmetric integral polymeric membrane comprising a skin and a porous support, characterised in that the membrane has a bulk porosity greater than 70%, the skin contains pores of average diameter 0.005 to 3.0 µm, and the support comprises a reticulated structure containing pores which gradually increase in size from the skin to the opposite face of the support, the average pore diameter of the pores at said opposite face being from 10 to 20000 times the average pore diameter of the skin pores.

2. A membrane according to claim 1, in which the polymeric membrane is of a polyimide, a polyacrylonitrile, a polycarbonate, a polyarylsulphone, or a mixture of two or more thereof.

3. A membrane according to claim 1 or 2, in which the pore size distribution (the ratio of maximum pore size to the average pore size) within the skin is less than 5:1.

4. A membrane according to claim 3, in which said pore size distribution is less than 3:1.

5. A membrane according to claim 4, in which the skin constitutes less than 5% of the thickness of the membrane.

6. A membrane according to any of claims 1 to 5, which has substantially greater dirt-retaining ability in one flow direction than the other.

7. A method of using a membrane according to any of claims 1 to 6, in which the membrane is disposed in a fluid flow with the support upstream such that the volume of fluid passed through said membrane by the time the rate of flow through said membrane is reduced to 50% of the initial value is at least twice the volume of fluid which would be passed through the same membrane if it had its skin upstream.

8. A method according to claim 7, in which said volume of fluid passed is at least five times the volume of fluid which would be passed through the same membrane if it had its skin upstream.

9. A method of carrying out a bubble-point test on a membrane according to any of claims 1 to 6 when said membrane is used in a fluid flow with the support upstream, in which a gas is passed through the wetted membrane, the gas pressure required to push a bubble through the pores being indicative of the pore size of the membrane, wherein pores are eliminated from the entire outer edge surface prior to passage of said gas through the membrane.

## Revendications

1. Une membrane polymère intégrée asymétrique ayant une peau et un support poreux, caractérisée en ce que la membrane a une porosité apparente supérieure à 70%, la peau contient des pores ayant un diamètre moyen de 0,005 à 3,0 µm, et le support comprend une structure réticulée contenant des pores qui croissent graduellement en taille de la peau à la face opposée du support, le diamètre moyen des pores à ladite face opposée étant de 10 à 20.000 fois le diamètre moyen des pores de la peau.

2. Une membrane selon la revendication 1, dans laquelle la membrane polymère est un polyimide, un polyacrylonitrile, un polycarbonate, une polyarylsulfone ou un mélange de deux ou plus d'entre eux.

3. Une membrane selon la revendication 1 ou 2, dans laquelle la distribution de la taille des pores (le support de la taille maximale des pores à la taille moyenne des pores) dans la peau est inférieure à 5/1.

4. Une membrane selon la revendication 3, dans laquelle ladite distribution de la taille des pores est inférieure à 3/1.

5. Une membrane selon la revendication 4, dans laquelle la peau constitue moins de 5% de l'épaisseur de la membrane.

6. Une membrane selon l'une quelconque des revendications 1 à 5, qui a une capacité de retention des saletés nettement supérieure dans une direction d'écoulement que dans l'autre.

7. Un procédé d'emploi d'une membrane selon l'une quelconque des revendications 1 à 6, dans lequel la membrane est disposée dans l'écoulement d'un fluide avec le support en amont, si bien que le volume de fluide traversant ladite membrane pendant la période où le débit à travers ladite membrane est réduit à 50% de la valeur initiale, est au moins le double du volume de fluide qui traverserait le même membrane si sa peau était en amont.

8. Un procédé selon la revendication 7, dans lequel ledit volume de fluide ayant traversé est au moins égal à cinq fois le volume de fluide qui traverserait la même membrane si sa peau était en amont.

9. Un procédé de réalisation d'un essai de point de bulle sur une membrane selon l'une quelconque des revendications 1 à 6, dans lequel ladite membrane est utilisée dans un écoulement de fluide avec le support en amont, dans lequel un gaz traverse la membrane mouillée, la pression du gaz nécessaire pour chasser une bulle à travers les pores indiquant la taille des pores de la membrane, où les pores sont éliminés de la totalité de la surface périphérique avant le passage dudit gaz à travers la membrane.

## Patentansprüche

1. Asymmetrische, integrale, polymere Membran, umfassend eine Haut und einen porösen Träger, dadurch gekennzeichnet, dass die Membran eine Massenporosität von grösser als 70% besitzt, die Haut Poren mit einem durchschnittlichen Durchmesser von 0,005 bis 3,0 µm enthält und der Träger eine netzartige Struktur, enthaltend Poren, deren Grösse von der Haut her zur gegenüberliegenden Fläche stufenweise zunimmt, wobei der durchschnittliche Porendurchmesser an dieser gegenüberliegenden Fläche das 10- bis 20 000-fache des durchschnittlichen Porendurchmessers an der Haut beträgt, aufweist.

2. Membran nach Anspruch 1, dadurch gekennzeichnet, dass die polymere Membran aus einem Polyimid, Polyacrylnitril, Polycarbonat, Polyarylsulfon oder einer Mischung aus zwei oder mehreren hiervon besteht.

3. Membran nach Anspruch 1 oder 2, dadurch gekennzeichnet, dass die Porengrössenverteilung (das Verhältnis von maximaler Porengrösse zu durchschnittlicher Porengrösse) innerhalb der Haut weniger als 5:1 beträgt.

4. Membran nach Anspruch 3, dadurch gekennzeichnet, dass die Porengrössenverteilung weniger als 3:1 beträgt.

5. Membran nach Anspruch 4, dadurch gekennzeichnet, dass die Haut weniger als 5% der Dicke der Membran ausmacht.

6. Membran nach mindestens einem der Ansprüche 1 bis 5, dadurch gekennzeichnet, dass sie eine wesentlich grössere Schmutzrückhaltefähigkeit in einer Strömungsrichtung als in der anderen besitzt.

7. Verfahren zur Verwendung einer Membran gemäss einem der Ansprüche 1 bis 6, wobei die Membran in einer Fluidströmung mit dem Träger stromaufwärts angeordnet ist, so dass das durch die Membran hindurchgeströmte Fluidvolumen zu der Zeit, bei der die Strömungsrate durch die Membran auf 50% des Anfangwerts reduziert ist, mindestens das doppelte des Fluidvolumens beträgt, das durch die gleiche Membran hindurchgeströmt wäre, wenn sie mit ihrer Haut stromaufwärts angeordnet wäre.

8. Verfahren nach Anspruch 7, dadurch gekennzeichnet, dass das hindurchgeströmte Fluidvolumen mindestens das fünffache des Fluidvolumens beträgt, das durch die gleiche Membran hindurchgeströmt wäre, wenn sie mit ihrer Haut stromaufwärts angeordnet wäre.

9. Verfahren zur Durchführung einer Blasenpunkt-Prüfung auf einer Membran gemäss einem der Ansprüche 1 bis 6, wenn die Membran in einer Fluidströmung mit stromaufwärts angeordneten Träger verwendet wird, wobei ein Gas durch die benetzte Membran hindurchgeleitet wird, wobei der zum Durchdrücken einer Blase durch die Poren erforderliche Gasdruck für die Porengrösse der Membran kennzeichnend ist, und wobei Poren von der gesamten äusseren Randfläche eliminiert werden, bevor das Gas durch die Membran geleitet wird.

FIG. 1

(Ia)

**TEMPERATURE** (vertical axis)

MISCIBLE

Tc

STABLE

14

BINODAL 10

SPINODAL 11

12 — 13

CONCENTRATION OF POLYMER

(Ib)

POLYMER

11a

12a

13a

14a

10a

STABLE

SOLVENT — NON-SOLVENT

FIG. 2

25,000 MOL. WT. CUTOFF

TOP SURFACE
100,000 X

BOTTOM SURFACE
80 X

PORE ASYMMETRY 1:20,000

# FIG. 3

25,000 MOL. WT. CUTOFF

TOP SURFACE
100,000 X

BOTTOM SURFACE
20,000 X

PORE ASYMMETRY 1:1

FIG. 4

4